# EUROPÄISCHE PATENTSCHRIFT

(11) **EP 3 127 414 B1**
(45) Veröffentlichungstag und Bekanntmachung des Hinweises auf die Patenterteilung: **13.05.2020**
(21) Anmeldenummer: 16180784.7
(22) Anmeldetag: 22.07.2016
(51) Int. Cl.: A01C 7/04, A01C 7/08

(54) **DOSIERAGGREGAT FÜR KÖRNIGES GUT**
METERING ASSEMBLY FOR GRANULAR MATERIALS
GROUPE DE DOSAGE POUR SEMENCES

(30) Priorität: 03.08.2015 DE 102015112701
(43) Veröffentlichungstag der Anmeldung: 08.02.2017
(73) Patentinhaber: Horsch Maschinen GmbH, 92421 Schwandorf (DE)
(72) Erfinder: HASELHOFF, Alexander, 92421 Schwandorf (DE)
(74) Vertreter: Benninger, Johannes

(56) Entgegenhaltungen:
- US-A- 3 999 690
- US-A- 4 898 108
- US-A- 6 109 193

## Beschreibung

Die vorliegende Erfindung betrifft ein Säaggregat mit einem Dosieraggregat für körniges Gut mit den Merkmalen des unabhängigen Anspruchs 1.

Ein bekanntes Dosieraggregat für körniges Gut stellt die EP 0 636 306 A1 dar. Das Dosieraggregat umfasst ein Gehäuse mit einer kreisbahnförmigen Innenmantelfläche, einer Einlassöffnung für körniges Gut, einer rotierende Fördereinrichtung für das körnige Gut, sowie einer Auslassöffnung. Das Gehäuse besteht aus einem ersten und einem zweiten Gehäusebereich, wobei die beiden Bereiche durch eine feststehende Scheibe getrennt werden. Das Dosieraggregat ist dabei so ausgebildet, dass das körnige Gut in eine Tasche gedrängt wird, wobei die Tasche durch ein oder mehreren Öffnungen mit der Gehäuseinnenmantelfläche eines ersten Gehäusebereichs gebildet wird. Die Körner können durch die Zentrifugalkräfte kreisförmig, unterstützt durch die Fördereinrichtung, entlang der Innenmantelfläche bewegt werden. Über die Scheibe können überschüssige Körner in den Taschen abgestreift werden und in das Innere des Gehäuses zurückgeführt werden.

Zudem offenbaren die WO2015/015005 und WO 2013/186175 A1 ein Dosieraggregat, bei dem die Körner über eine Einlassöffnung in das Gehäuseinnere des Dosieraggregats zugeführt werden. Durch den Einfluss von Zentrifugalkräften und durch Unterstützung einer konzentrisch rotierenden Fördereinrichtung wird das körnige Gut entlang der inneren Kontur und/oder Fläche des Dosieraggregats zu einer Auslassöffnung geleitet. Das körnige Gut gleitet dabei zumindest abschnittsweise an der Innenmantelfläche des Gehäuses entlang zur Auslassöffnung.

Ein weiteres Dosieraggregat wird durch US 3 999 690 A offenbart, bei welchem innerhalb eines Gehäuses eine rotierende Fördereinrichtung vorgesehen ist. Die Fördereinrichtung weist an ihrem Außenumfang Öffnungen auf. Die Körner werden von den Öffnungen beim Passieren einer innerhalb des Dosieraggregats vorgesehenen Druckkammer aufgenommen und bewegt. Nach Erreichen einer Kammer mit geringerem Druck als in der Druckkammer fallen die Körner aus den Öffnungen heraus.

Bei den im Stand der Technik bekannten Dosieraggregaten hat sich gezeigt, dass die an der Innenmantelfläche und/oder der inneren Kontur/Fläche des Gehäuses ständig entlang gleitenden Körner eine abrasive Wirkung auf die Gleitflächen entfalten. In der Regel handelt es sich um diejenigen Bereiche, an welche das körnige Gut aufgrund der Einflüsse der Zentrifugalkräfte, unterstützt durch die konzentrische Bewegung einer Fördereinrichtung, entlang geführt werden. Diese Bereiche der Innenmantelfläche bzw. der inneren Kontur des Gehäuses haben sich in der Praxis als relativ verschleißanfällig erwiesen.

Aufgrund der ausgeprägten Verschleißerscheinungen muss daher in regelmäßigen Abständen das Gehäuse und/oder sogar das komplette Dosieraggregat ausgetauscht bzw. erneuert werden. Die Nutzung solcher Dosieraggregate unterliegt damit einem hohen Wartungsaufwand. Nicht zuletzt entstehen somit für den Endverbraucher hohe Kosten.

Der Erfindung liegt die Aufgabe zugrunde, ein Dosieraggregat zur Verfügung zu stellen, welches Verschleißerscheinungen an der Innenmantelfläche des Gehäuses reduziert und auf einfache Art und Weise hergestellt werden kann. Gleichzeitig sollen die Kosten gesenkt und der Wartungsaufwand reduziert werden.

Diese Aufgaben werden durch ein Dosieraggregat mit den Merkmalen im Anspruch 1 gelöst. Vorteilhafte Ausgestaltungen und Weiterbildungen der Erfindung sind in den jeweiligen abhängigen Ansprüchen angegeben.

Zur Lösung der genannten Aufgaben schlägt die Erfindung ein Säaggregat mit den Merkmalen des Anspruchs 1 vor. Innerhalb des Gehäuses ist eine konzentrisch rotierende Fördereinrichtung für befördertes körniges Gut angeordnet. Das beförderte körnige Gut kann über eine Auslassöffnung, die annähernd tangential an die Innenmantelfläche des Gehäuses anschließt, das Dosieraggregat bspw. in ein Saatrohr und/oder eine Förderleitung verlassen. Die Fördereinrichtung kann bspw. in Form einer rotierenden Scheibe ausgebildet sein. An ihrem Außenbereich oder ihrer Stirnseite weist die Fördereinrichtung ein oder mehrere Öffnungen oder Absätze auf, so dass das beförderte körnige Gut vereinzelt werden kann. Die ein oder mehreren Öffnungen können bspw. in Form von Nuten oder Stegen o. dgl. ausgebildet sein. Diese bilden in einem ersten Gehäuse- und/oder Förderbereich mit der Gehäuseinnenmantelfläche eine Tasche, in welche die Körner entlang der Innenmantelfläche des Gehäuses gedrängt werden. Die Förderung der Körner innerhalb dieser Tasche erfolgt unter dem Einfluss von Zentrifugalkräften, unterstützt durch die Fördereinrichtung, annähernd kreisförmig. Die Körner des ungeordneten Körnerstroms werden nun aufgereiht und vereinzelt. Zur Vereinzelung schließt sich an den ersten Förderbereich im Gehäuse ein zweiter Bereich an, der als Vereinzelungsbereich fungiert. In diesem zweiten Bereich wird durch eine veränderte Kontur der Innenmantelfläche des Gehäuses nur noch jeweils ein einzelnes Korn weiterbefördert. Überschüssige Körner werden hingegen abgesondert und zur erneuten Förderung in den ersten Gehäusebereich zurückgeführt. Die vereinzelte Kornförderung erfolgt im zweiten Förder- bzw. Vereinzelungsbereich mittels Zentrifugalkräften, unterstützt durch die konzentrisch rotierende Fördereinrichtung. Die am Außenbereich oder an der Stirnseite angeordneten Öffnungen oder Absätze der konzentrisch rotierenden Fördereinrichtung sorgen für die Mitnahme jeweils nur eines Korns. Durch den permanenten Vereinzelungsprozess unterliegt die im Stand der Technik bekannte Innenmantelfläche des Gehäuses großen Abnutzungen. Bei vorliegender Erfindung ist die Innenmantelfläche des Gehäuses zumindest abschnittsweise durch einen Verschleißeinsatz gebildet. Mit dieser Anordnung können die Kosten für den Endverbraucher erheblich reduziert werden. Ein Austausch des gesamten Gehäuses bei auftretenden Verschleißerscheinungen ist nicht mehr erforderlich. Zumindest abschnittsweise bedeutet in diesem Zusammenhang, dass sich der Verschleißeinsatz nicht über den gesamten Umfangsverlauf, sondern nur über definierte Abschnitte der Innenmantelfläche erstreckt.

Bei dem erfindungsgemäßen Dosieraggregat folgt der Verschleißeinsatz einer Form oder Kontur der Innenmantelfläche des Gehäuses. Die Form oder Kontur der Innenmantelfläche des Gehäuses ist in der Regel annähernd kreisbahn- und/oder kreissegmentförmig ausgebildet, so dass das beförderte körnige Gut unter Einfluss der Zentrifugalkräfte, unterstützt durch die konzentrisch rotierende Fördereinrichtung, an die Innenmantelfläche gedrängt wird. Anschließend kann das körnige Gut vereinzelt werden. Der Verschleißeinsatz kann somit die Funktion der Innenmantelfläche des Gehäuses zumindest abschnittsweise übernehmen.

Weiter kann vorgesehen sein, dass sich der Verschleißeinsatz über einen definierten Winkelbereich der in etwa flachzylindrisch geformten Gehäuseinnenmantelfläche von mindestens 180°, vorzugsweise von circa 270° erstreckt. Der Verschleißeinsatz beginnt in dem Bereich, bei welchem die Kreisbahn der Innenmantelfläche ansteigt. Der Verschleißeinsatz kann wahlweise auch an jeder beliebig anderen Stelle beginnen. Als vorteilhaft hat sich in der Praxis erwiesen, dass der Verschleißeinsatz einen Winkel von circa 270° einschließt und etwa im Abgabebereich der Körner an die bspw. Saatrohre endet. In diesen Bereichen sind die Abnutzungserscheinungen besonders groß, da die ungeordneten Körner in einem ersten Gehäuse- und/oder Förderbereich in eine Tasche gedrängt werden und somit entlang der Innenmantelfläche gleiten. Verstärkt wird der Prozess der Körnerförderung durch den Einfluss von Zentrifugalkräften, die sich u.a. aus dem Förderstrom ergeben. In der Regel basiert dieser Förderstrom auf Luftströmung. Die konzentrisch rotierende Fördereinrichtung unterstützt zusätzlich die Ausbildung der Zentrifugalkräfte. Der Verschleißeinsatz erstreckt sich auch über den als Vereinzelungsbereich wirkenden Abschnitt. In diesem Bereich wird jeweils nur noch ein einzelnes Korn weiterbefördert. Überschüssige Körner werden abgesondert und zur erneuten Förderung in den ersten Gehäusebereich zurückgeführt. In diesem Zusammenhang hat es sich als vorteilhaft erwiesen, die Innenmantelfläche des Gehäuses zumindest abschnittsweise mit einem Verschleißeinsatz zu verstärken, wobei der Verschleißeinsatz einen Winkel von mindestens 180°, vorzugsweise einen Winkel von circa 270° einschließt.

Denkbar ist auch, dass sich der Verschleißeinsatz über die gesamte Innenmantelfläche erstreckt. Somit wäre sowohl die Innenmantelfläche des ersten Gehäusebereichs als auch die Innenmantelfläche des zweiten Gehäusebereichs durchgehend verstärkt.

Da für die Herstellung des Verschleißeinsatzes verschiedene Fertigungsverfahren möglich sind, kann der Verschleißeinsatz gemäß einer Weiterbildung der Erfindung einteilig oder mehrteilig ausgebildet sein.

Bei der ersten Variante besteht der Verschleißeinsatz durchgehend aus einem einzigen Bauteil mit einer definierten Dicke von wenigen Millimetern bis Zentimetern. Mit dem Verschleißeinsatz soll die Innenmantelfläche zumindest abschnittsweise verstärkt werden. Mögliche potentielle Fehlerquellen und/oder Störstellen wie bspw. Bauteilübergänge, die den Prozess der Kornvereinzelung möglicherweise beinträchtigen, können durch die Ausbildung eines einzigen Bauteils so gering wie möglich gehalten werden. Der aus einem einzigen Teil gefertigte Verschleißeinsatz kann sich über einen definierten Winkel von mindestens 180°, vorzugsweise von circa 270° erstrecken.

Alternativ kann der Verschleißeinsatz auch mehrteilig, mindestens aus zwei Teilen, ausgebildet sein. Der Verschleißeinsatz kann so aus mehreren Teilen bestehen und zusammengesetzt werden. Zum Zusammensetzen des Verschleißeinsatzes können bspw. Steck- und/oder Schraubverbindungen in Frage kommen. Alternativ können die einzelnen Bauteile auch direkt im Gehäuse montiert werden. Ein Zusammensetzen der einzelnen Bauteile bzw. eine Vormontage wäre somit nicht erforderlich. Der Aufwand zur Montage kann dadurch gering gehalten werden.

Aufgrund des Vereinzelungsprozesses ist durchaus zu erwarten, dass die Innenmantelfläche bzw. die einzelnen Bauteile des Verschleißelementes verschieden stark abgenutzt wird/werden. Aufgrund der mehrteiligen Ausgestaltung des Verschleißelements kann ein gezieltes Austauschen der einzelnen Bauteile erfolgen, da nur die abgenutzten Elemente ausgetauscht werden müssen. Der Austausch kann flexibler und effizienter erfolgen. Zugleich können die Kosten für Ersatzteile, Fertigung und/oder Wartung reduziert werden. In der Regel ist es jedoch sinnvoll, den Verschleißeinsatz mit seinen gesamten Bauteilen zu wechseln, so dass das Dosieraggregat weiterhin die gewünschten Qualitätsanforderungen erfüllen kann.

Bei dem erfindungsgemäßen Dosieraggregat kann der Verschleißeinsatz aus einem verschleißfesten Material ausgebildet sein. Als verschleißfestes Material können diverse Formen von Metallen und/oder Hartmetalle wie Stahl, P-Hartmetalle o. dgl. eingesetzt werden. Derartige Materialien zeichnen sich durch eine hohe Härte und Verschleißfestigkeit aus. Bei der Wahl des Materials ist auch darauf zu achten, dass das Gleiten der Körner entlang der Innenmantelfläche nicht beeinträchtigt wird.

Wahlweise kann der Verschleißeinsatz auch aus einem verschleißfesten Kunststoff ausgebildet sein. Hier können diverse Hochleistungskunststoffe und/oder Kunststoffe mit hoher Verschleißfestigkeit verwendet werden. Auch diverse andere Materialien wären denkbar. Eine weitere Möglichkeit besteht darin, das verwendete Material zu beschichten. So wäre vorzugsweise eine Kombination aus Aluminium mit einer Hartbeschichtung denkbar.

Weiter kann der Verschleißeinsatz auch aus mehreren Materialien bestehen. Hier sind Kombinationen sämtlicher verschleißbeständiger Materialien wie, z.B. Metalle und/oder Hartmetalle beliebig möglich. Auch können verschleißbeständige Materialien mit weiteren verschiedenen Materialien kombiniert werden, die zwangsläufig nicht eine ähnlich hohe Verschleißfestigkeit aufweisen. Hier sollte, wie bei dem Prinzip der Beschichtung, der obere Abschnitt und/oder Schicht des Verschleißeinsatzes durch ein verschleißbeständiges Material ausgebildet sein. Die untere Schicht besteht aus einem weniger verschließbeständigen Material.

Gemäß einer Weiterbildung der Erfindung kann der Verschleißeinsatz lösbar oder unlösbar in das Gehäuse angeordnet sein. Zur Befestigung des Verschleißeinsatzes in das Gehäuse stehen verschiedene Möglichkeiten zur Verfügung. So kann der Verschleißeinsatz lösbar bspw. mittels Schraub- und/oder Steckverbindungen und/oder entsprechender Passungen o. dgl. an das Gehäuse befestigt sein. Der Verschleißeinsatz kann dann eine Innenmantelfläche ausbilden. Bei Abnutzungen und Verschleißerscheinungen kann der Verschleißeinsatz auf einfache Weise gelöst und entsprechend ausgetauscht werden. Die lösbare Variante hat sich als vorteilhaft erwiesen, da nur der Verschleißeinsatz bei Bedarf ausgewechselt werden muss. Ein Austausch des gesamten Gehäuses ist nicht mehr erforderlich.

Wahlweise kann der Verschleißeinsatz auch unlösbar mit dem Gehäuse bspw. mittels Niet-, Schweiß- und/oder Klebverbindungen o. dgl. befestigt werden. Denkbar ist auch, dass der Verschleißeinsatz mittels Spritzguss hergestellt werden kann. Auch hier bildet der angebrachte Verschleißeinsatz die Innenmantelfläche aus, an welcher die Körner unter Einfluss der Zentrifugalkräfte entlang gleiten.

Es kann vorgesehen sein, dass der Verschleißeinsatz an einem Ende mit der Auslassöffnung abschließt. Die zunächst ungeordneten Körner werden in einem ersten Gehäuse- und/oder Förderbereich in eine Tasche gedrängt, wobei die Tasche durch die ein oder mehreren Öffnungen oder Absätze der Fördereinrichtung mit der Gehäuseinnenmantelfläche gebildet wird. Anschließend können die Körner entlang der Innenmantelfläche v.a. durch Einfluss der auftretenden Zentrifugalkräfte, unterstützt durch die konzentrisch rotierende Fördereinrichtung, gleiten. In einem an den ersten Bereich anschließenden zweiten Bereich können die Körner vereinzelt werden. Dieser Bereich bildet einen Vereinzelungsbereich aus, bei dem jeweils nur noch ein einzelnes Korn weiterbefördert wird. Überschüssige Körner werden abgesondert und zur erneuten Förderung in den ersten Gehäusebereich zurückgeführt. Der Bereich der Kornabgabe zeichnet sich vor allem durch die annähernd tangential an die Innenmantelfläche anschließende Auslassöffnung aus. Die Körner werden dann an ein Saatrohr zum dosierten Ausbringen auf das Feld geleitet. Dadurch, dass nach der Kornabgabe nur noch wenige bis keine Körner an der Innenmantelfläche des Gehäuses gleiten, sind in diesem Bereich geringe bis keine Verschleißerscheinungen zu erwarten. Erfindungsgemäß endet der Verschleißeinsatz im Bereich der Auslassöffnung. Hierfür spricht auch, dass sich der annähernd kreisbahn- und/oder kreissegmentförmig ausgebildete Verschleißeinsatz über einen definierten Winkelbereich von vorzugsweise circa 270° erstreckt, so dass der Verschleißeinsatz etwa im Bereich der Kornabgabe endet.

Die Erfindung sieht vor, dass der Verschleißeinsatz flächig ausgebildet ist. Besonders im ersten Gehäusebereich des Dosieraggregats ist diese Ausprägung wesentlich, da die Körner entlang dieser Fläche gleiten. Erhebungen und/oder evtl. auftretende Widerstände sollten bei der Ausbildung der Innenmantelfäche möglichst vermieden werden.

Gemäß einer Weiterbildung der Erfindung bewirkt die Fördereinrichtung aufgrund ihrer Kreisbewegung eine Vereinzelung des körnigen Guts entlang des Verschleißeinsatzes. Der Verschleißeinsatz entspricht zumindest abschnittsweise der Kontur oder Form der Innenmantelfläche des Gehäuses. Das körnige und noch ungeordnete Gut wird über eine Einlassöffnung in ein Gehäuse eines Dosieraggregats geleitet. Die innerhalb des Gehäuses angeordnete Fördereinrichtung weist an ihrem Außenbereich oder an ihrer Stirnseite ein oder mehrere Öffnungen oder Absätze auf. Diese bilden in einem ersten Gehäuse- und/oder Förderbereich mit der Gehäuseinnenmantelfläche eine Tasche, in welche die Körner gedrängt werden. Durch eine Rotationsbewegung der Fördereinrichtung mittels eines Antriebsmotors bspw. in Form eines Elektromotors können die Körner unter Einfluss von Zentrifugalkräften innerhalb dieser Tasche annähernd kreisförmig entlang der Innenmantelfläche bzw. des Verschleißeinsatzes des Gehäuses bewegt werden. Zur Vereinzelung schließt sich an den ersten Förderbereich im Gehäuse ein zweiter Bereich an, der als Vereinzelungsbereich fungiert. In diesem zweiten Bereich wird durch eine veränderte Kontur oder durch eine geneigte Gehäusefläche der Innenmantelfläche des Gehäuses nur noch jeweils ein einzelnes Korn weiterbefördert. Überschüssige Körner werden hingegen abgesondert und zur erneuten Förderung in den ersten Gehäusebereich zurückgeführt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer pneumatisch arbeitenden Sämaschine mit volumetrischer Dosierung des Saatgutes, das über einen Zentralverteiler zu einzelnen Saatleitungen mit mündungsseitig daran angeordneten Säscharen geführt wird.
Fig. 2A zeigt eine schematische Seitenansicht einer Ausführungsvariante eines erfindungsgemäßen Dosieraggregats.
Fig. 2B zeigt eine schematische Perspektivansicht des Dosieraggregats gemäß Fig. 1A.
Fig. 3A zeigt eine schematische Seitenansicht des Dosieraggregats gemäß Fig. 1A und Fig. 1B mit geöffnetem Gehäuse und darin befindlichem Verschleißeinsatz.
Fig. 3B zeigt eine schematische Perspektivansicht des Dosieraggregats gemäß Fig. 3A.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein können und stellen keine abschließende Begrenzung dar.

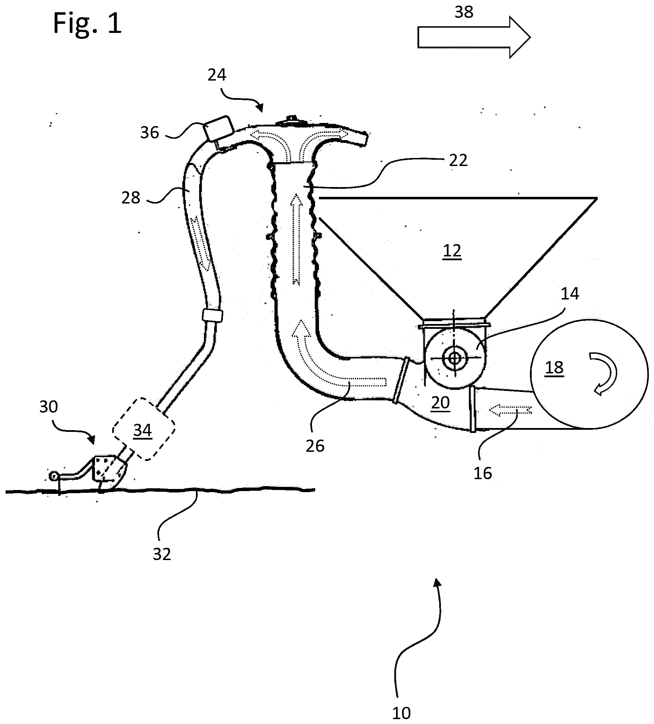

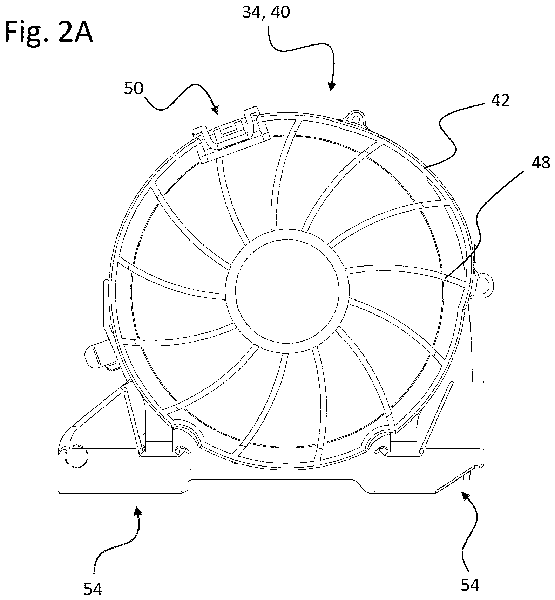

Zur Verdeutlichung der exakten Funktions- und Wirkungsweise des in den Figuren 2A bis 3B näher beschriebenen Dosieraggregats 34 soll zunächst anhand der schematischen Darstellung der Fig. 1 eine pneumatisch arbeitende Sämaschine 10 gezeigt und in ihrer Funktionsweise erläutert werden, die dazu geeignet und ausgestattet ist, Saatgut volumetrisch zu dosieren und in regelmäßigen Reihen auszubringen. Die Sämaschine 10 wird im vorliegenden Zusammenhang auch als Verteil- und/oder Sävorrichtung 10 bezeichnet. Bei der gezeigten Sämaschine 10 bzw. Verteil- und/oder Sävorrichtung wird das zu verteilende körnige Gut bzw. Saatgut über einen Zentralverteiler zu den einzelnen Saatleitungen 28 mit jeweils mündungsseitig daran angeordneten Säscharen geführt. Die in ihrem grundlegenden Aufbau aus dem Stand der Technik bekannte Sämaschine 10 weist typischerweise einen trichterförmigen oder andersartig geformten Vorratsbehälter 12 mit körnigem Gut, insbesondere mit Saatgut, ggf. auch mit Dünger auf, an dessen Unterseite sich mindestens eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten oder zumindest abschnittsweise annähernd vertikal verlaufenden Steigrohr 22 führt. An einer Oberseite des Steigrohrs 22 - dies kann insbesondere ein sog. Wellrohr o. dgl. sein - befindet sich ein Zentralverteiler 24, der den körnertragenden Luftstrom 26 möglichst bzw. weitgehend gleichmäßig zu einer Vielzahl von Saatleitungen 28 verteilt und insbesondere gleichmäßig zwischen diesen Leitungen 28 aufteilt.

Die einzelnen Saatleitungen 28, von denen der besseren Übersichtlichkeit halber nur eine einzelne dargestellt ist, münden schließlich jeweils an den einzelnen Säscharen 30, mit denen das Saatgut (bzw. das körnige Gut oder der Dünger) in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es die Fig. 1 verdeutlicht, befindet sich innerhalb der Saatleitung 28, typischerweise in unmittelbarer Nähe zum Säschar 30, ein Dosieraggregat 34 im Sinne der vorliegenden Erfindung, das für eine Beaufschlagung des Säschars 30 mit körnigem Gut bzw. mit Saatgut sorgt, welches durch die Einwirkung des Dosieraggregats 34 in annähernd gleichen Kornabständen und mit jeweils weitgehend gleichen Fördergeschwindigkeiten in den Ackerboden 32 abgegeben wird. Da bei einer realen Sämaschine eine Vielzahl solcher paralleler Säschare 30 vorgesehen ist (z.B. zwölf, sechzehn, zwanzig, vierundzwanzig, zweiunddreißig oder mehr), die jeweils mit separaten Saatleitungen 28 verbunden und von diesen jeweils versorgt sind, ist auch eine entsprechende Anzahl von jeweils gleichartig aufgebauten Dosieraggregaten 34 vorgesehen, da jede einzelne Saatleitung 28 ein solches Dosieraggregat 34 aufweist.

Der Aufbau des Dosieraggregats 34 und seine Funktionsweise kann insbesondere dem Dosieraggregat entsprechen, wie es in der WO 2013/186175 A1 im Detail beschrieben ist. Wahlweise kann das Dosieraggregat auch dem Dosieraggregat gemäß WO 2015/015005 A1 entsprechen. Dort wird das durch eine Luftströmung getragene und beförderte körnige Gut bzw. Saatgut durch eine Zuführleitung in das Dosieraggregat 34 geleitet, dort in einem ungefähr kreisbogenförmigen Verlauf geführt und tangential an eine sich an das Dosieraggregat 34 anschließende Ausgangsleitung übergeben, die normalerweise in kurzer Distanz in das Säschar 30 mündet. Die durch die Ausgangsleitung geführte und das annähernd äquidistant beförderte Saatgut oder körnige Gut tragende und fördernde Luftströmung wird innerhalb des Dosieraggregats 34 mittels wenigstens einer ungefähr konzentrisch innerhalb des Dosieraggregats 34 rotierenden, elektromotorisch mit regelbarer Drehzahl angetriebenen Förder- oder Fächerscheibe (nicht gezeigt) gefördert und/oder beschleunigt.

Es sei an dieser Stelle ergänzend darauf hingewiesen, dass die in Fig. 1 als Luftströmung 26 bezeichnete Förderluft, die vom Gebläse 18 erzeugt wird, und der mittels der Dosiereinrichtung 14 Körner, Saatgut, Dünger etc. aus dem Vorratsbehälter 12 zudosiert wird, auch im weiteren Strömungsverlauf durch die Steigleitung 22, durch den Zentralverteiler 24, bei Passieren des optionalen Sensors 36 bzw. der Sensoren 36 sowie bei der weiteren Förderung durch das Dosieraggregat 34 bzw. durch die Dosieraggregate 34, die sich in den jeweiligen Saatleitungen 28 in unmittelbarer Nähe vor den Säscharen 30 befinden, als Luftstrom 26 bzw. als körnertragender Luftstrom 26 bezeichnet wird, auch wenn der durch die Steigleitung 22 geförderte Luftstrom 26 im weiteren Förderverlauf durch den Zentralverteiler 24 auf die Mehrzahl von Saatleitungen 28 aufgeteilt wurde.

Wahlweise kann in zumindest einer der Saatleitungen 28, insbesondere in einem Bereich, der sich unmittelbar an den Zentralverteiler 24 anschließt, ein Sensor 36 zur Erfassung der innerhalb definierter Zeiträume durch die Saatleitung 28 geförderte Körner angeordnet sein, dessen Ausgangssignale zur Steuerung der Sämaschine 10 und/oder der jeweiligen Dosieraggregate 34 eingesetzt werden können. Es können auch mehrere solcher Sensoren 36 in verschiedenen Saatleitungen 28 vorhanden sein; wahlweise kann auch jeder Saatleitung 28 jeweils ein separater Sensor 36 zugeordnet sein. Die Sensoren 36 können bspw. als optisch oder als induktiv arbeitende Sensoren ausgestaltet sein. Als Sensoren 36 zur Erfassung der geförderten Kornmengen können auch piezoelektrisch arbeitende Prallsensoren o. dgl. eingesetzt werden. Weiterhin kann die Sämaschine 10 und/oder ein die Sämaschine 10 bewegendes Zugfahrzeug (nicht gezeigt) mit einem geeigneten Sensor bzw. mit geeigneten Einrichtungen zur Erfassung einer Fahrgeschwindigkeit 38 ausgestattet sein, da diese Fahrgeschwindigkeit 38 insbesondere im Zusammenhang mit den vom Sensor 36 je Zeiteinheit erfassten Körnermengen zur Regelung der Sämaschine 10 und/oder deren Dosieraggregate 34, wahlweise auch des Gebläses 18 sowie der Dosiereinrichtung 14 ausgewertet werden kann.

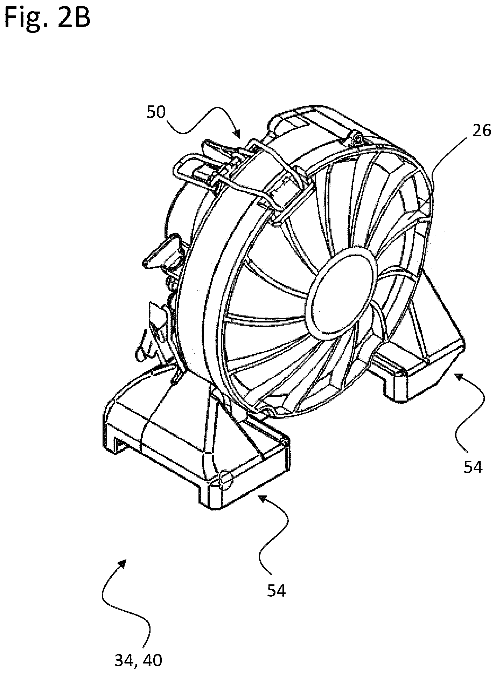

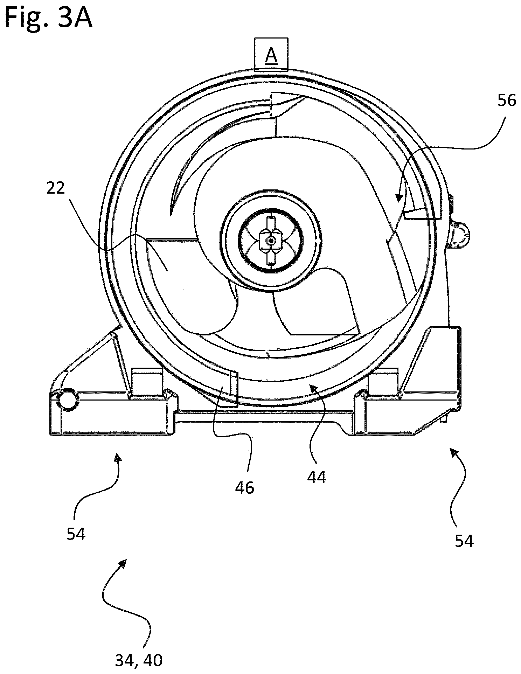

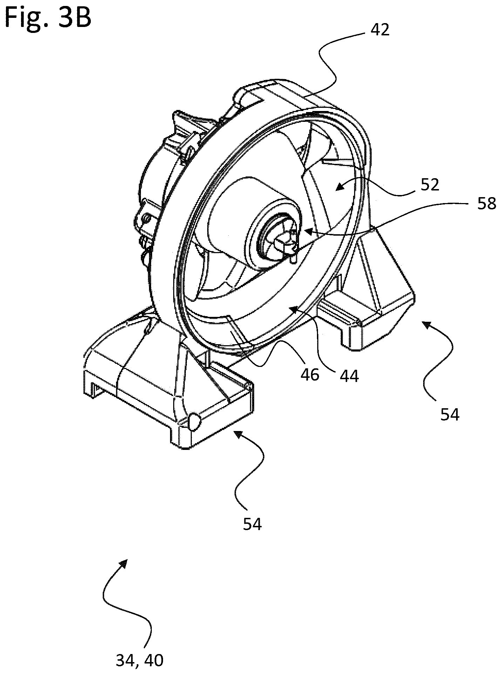

In den Figuren 2A und 2B ist das Dosieraggregat 34 in schematischen Ansichten dargestellt, das insbesondere ein Säaggregat 40 einer Verteil- oder Sämaschine für körniges Gut wie Samenkörner, Dünger o.dgl. gemäß Fig. 1 bilden kann und hierbei zur Kornvereinzelung eingesetzt wird. Das gezeigte Dosieraggregat 34 umfasst ein Gehäuse 42 mit einer zumindest annähernd kreisförmigen oder flachzylindrischen Kontur und/oder Form sowie mit einer annähernd kreisbahn- und/oder kreissegmentförmigen Innenmantelfläche 44 (vgl. Figuren 3A und 3B). Die Innenmantelfläche 44 kann bei vorliegender Erfindung zumindest abschnittsweise durch einen Verschleißeinsatz 46 gebildet werden (vgl. Figuren 3A und 3B). Das Gehäuse 42 des Dosieraggregats 34 zeichnet sich durch eine Vielzahl von leicht gekrümmten bzw. geschwungenen Stegen 48 aus. Die Stege 48 erstrecken sich auf den kreisrunden Gehäuseflachseiten von einem Zentrum des Dosieraggregats 34 nach außen. Wahlweise kann die Außenfläche des Gehäuses 42 auch anderes gestaltet werden, bspw. in Form einer glatten Außenfläche oder durch gerade verlaufende Stege 48. Das Gehäuse 42 setzt sich aus zwei Gehäusehälften zusammen, wobei beide Gehäusehälften unter Zuhilfenahme eines Verschlusses 50 zusammengehalten sind. Bei dem Verschluss 50 handelt es sich im gezeigten Ausführungsbeispiel um einen Bügelverschluss, der auf einfache Art und Weise bedient werden kann. Der Bügelverschluss basiert auf einer Drahtfeder und dem Kniehebelprinzip. Das Öffnen und Verschließen der beiden Gehäusehälften zu einer kompakten Einheit kann beliebig oft von Hand erfolgen. Alternativ können auch andere Verbindungsprinzipien verwendet werden. Möglich sind sämtliche lösbare Schraub-, Klemm- und/oder Steckverbindungen o. dgl. Gegebenenfalls sind auch unlösbare Verbindungsmethoden bspw. mittels Schweißen, Kleben und/oder Löten o. dgl. möglich. Bevorzugt sind allerdings die lösbaren Verbindungsmöglichkeiten, da ggf. bei Wartungsarbeiten das Gehäuse 42 auf einfache Art und Weise geöffnet sowie sein Innenraum kontrolliert werden kann.

In das Gehäuse 42 mündet wenigstens eine Einlassöffnung (hier nicht dargestellt) für einen Luftstrom 26 (vgl. Fig. 1) und darin befördertes körniges Gut bzw. zu vereinzelndes Saatgut. Innerhalb des Gehäuses 42 (vgl. Figuren 3A und 3B) ist eine konzentrisch rotierende Fördereinrichtung 52 für das in der Luftströmung getragene Gut angeordnet, die unterschiedlich ausgestaltet sein kann. Verschiedene Ausgestaltungsmöglichkeiten der rotierenden Fördereinrichtung 52 gehen bspw. aus der WO 2013/186175 A1 hervor. Weiter umfasst das Gehäuse 42 wenigstens eine Auslassöffnung (hier ebenfalls nicht dargestellt), die annähernd tangential an die Innenmantelfläche 44 anschließt und das körnige Gut weitgehend regelmäßig zu einer Saatleitung bzw. einem Saatrohr und/oder einer Förderleitung bzw. einem Säschar 30 (vgl. Fig. 1) abgibt.

Weiter umfasst das Dosieraggregat 34, insbesondere das Säaggregat 40 ein oder mehrere Stützfüße oder Standbeine 54. Die Stützfüße oder Standbeine 54 besitzen in den vorliegenden Figuren eine eckige Kontur und eine flache Unterseite mit seitlichen Flankenabschnitten, wobei allerdings auch jegliche weitere Ausgestaltungsformen möglich sind. Die Standbeine bzw. Stützfüße 54 sorgen für eine sichere und exakte Ausrichtung des Dosieraggregats 34 auf einem Rahmenrohr o. dgl. der Sämaschine 10 (Fig. 1). Auch ist es möglich, das Dosieraggregat 34 über seine Standbeine bzw. Stützfüße 54 an einer definierten Position innerhalb der Verteil- und/oder Sämaschine 10 bspw. über Schraub- und/oder Schweißverbindungen o. dgl. zu befestigen.

Das Dosieraggregat 34 bzw. das Säaggregat 40 mit dem erfindungsgemäßen Verschleißeinsatz 46 ist in den Figuren 3A und 3B in einigen Details dargestellt.

Wie erwähnt, kann die Funktionsweise des Dosieraggregats 34 sowie sein Aufbau weitgehend dem in der WO 2013/186175 A1 offenbarten Dosieraggregat entsprechen. Das dort durch einen Luftstrom getragene körnige Gut wird über eine Einlassöffnung (hier nicht dargestellt) in den Innenraum des Gehäuses 42 des Dosieraggregats 34 (vgl. auch Fig. 1) zugeführt. Innerhalb des Gehäuses 42 ist die rotierende Fördereinrichtung 52 für das beförderte körnige Gut angeordnet. Die Fördereinrichtung 52 ist durch eine im Gehäuse 42 rotierende Scheibe gebildet, die an ihrem Außenbereich oder an ihrer Stirnseite ein oder mehrere Öffnungen oder Absätze zur Mitnahme von körnigem Gut aufweisen kann. Die ein oder mehreren Öffnungen oder Absätze können bspw. in Form von Nuten oder Stegen o. dgl. ausgebildet sein. Die Fördereinrichtung 52 bildet eine Dosiereinrichtung, so dass aus einer ungeordneten Anhäufung von körnigem Gut jeweils nur ein einzelnes Korn der Auslassöffnung (hier nicht dargestellt) zugeführt werden kann. Aufgrund der Luftströmung werden zunächst die zugeleiteten Körner entlang der Innenmantelfläche 44 bewegt und anschließend in eine Tasche gedrängt. Die Tasche wird durch die ein oder mehreren Öffnungen oder Absätze der Scheibe mit der Gehäuseinnenmantelfläche 44 gebildet. Die Förderung der Körner entlang der Innenmantelfäche 44 innerhalb der Tasche erfolgt unter den Einfluss von Zentrifugalkräften annähernd kreisförmig und stellt einen ersten Förderbereich dar. Die Zentrifugalkräfte können auch durch die konzentrisch rotierende Scheibe unterstützt werden. An den ersten Förderbereich schließt sich ein zweiter Bereich an, der sog. Vereinzelungsbereich A (vgl. Fig. 3A). Hier weist die Innenmantelfläche 44 des Gehäuses 42 in Richtung der Auslassöffnung (hier nicht dargestellt) eine geneigte Gehäusefläche oder eine veränderte Kontur auf, so dass die zuvor ungeordnete Anhäufung des körnigen Guts in aller Regel auf ein einzelnes Korn reduziert werden kann. Überschüssige Körner werden hingegen abgesondert und zur erneuten Förderung in den ersten Gehäusebereich zurückgeführt.

Wie es insbesondere die Figuren 3A und 3B erkennen lassen, weist das Gehäuse 42 des Dosieraggregats 34 bzw. des Säaggregats 12 eine annähernd kreisbahn- und/oder kreissegmentförmige Innenmantelfläche 44 auf. Die Innenmantelfläche 44 des Gehäuses 42 des Dosieraggregats 34 wird bei vorliegender Erfindung zumindest abschnittsweise durch einen Verschleißeinsatz 46 gebildet, der in erster Linie dafür vorgesehen ist, Verschleißerscheinungen aufgrund der ständigen Reibung der Körner an der Innenmantelfläche 44 zu reduzieren. Der Verschleißeinsatz 46 entspricht dabei einer Form oder Kontur der Innenmantelfläche 44 des Gehäuses 14. Somit ist die Form und/oder Kontur des Verschleißeinsatzes 46 ebenfalls annähernd kreisbahn- und/oder kreissegmentförmig, so dass der Verschleißeinsatz 46 die Funktion der Innenmantelfläche 44 zumindest abschnittsweise übernimmt.

Der Verschleißeinsatz 46 erstreckt sich im vorliegenden Ausführungsbeispiel nicht über die gesamte Länge der Innenmantelfläche 44 des Gehäuses 42. Vielmehr erstreckt sich der Verschleißeinsatz 46 über einen definierten Winkelabschnitt innerhalb des Gehäuses 42 von mindestens 180°. Vorzugsweise erstreckt sich der Verschleißeinsatz 46 über einen Winkel von circa 270°. Der Verlauf des Verschleißeinsatzes 46 beginnt in dem Bereich, bei welchem ein Anstieg der Kreisbahn der Innenmantelfläche 44 erfolgt (vgl. Fig. 3A). Es sei darauf hingewiesen, dass sich in der Praxis gezeigt hat, dass die Verschleißerscheinungen besonders in den genannten Bereichen (Anstieg der Kreisbahn bis hin zur Kornabgabe 56 (Fig. 3A) der Innenmantelfläche 44 des Gehäuses 42 besonders ausgeprägt sind. Daher hat sich die Anordnung des Verschleißeinsatzes 46, wie in den Figuren 3A und 3B gezeigt, als besonders sinnvoll erwiesen. Wahlweise kann der Verschleißeinsatz 46 auch an einem anderen beliebigen Punkt beginnen und/oder sich über den gesamten Umfangsverlauf der Innenmantelfläche 44 erstrecken.

Der in den Figuren 3A und 3B gezeigte Verschleißeinsatz 46 ist einteilig und weist eine definierte Dicke bzw. Stärke von wenigen Millimetern bis Zentimetern aus. Alternativ kann der Verschleißeinsatz auch mehrteilig ausgebildet sein, so dass die einzelnen Bauteile bzw. Segmente bei der Montage im Gehäuse 42 zusammengesetzt werden können. Der Verschleißeinsatz 46 kann im Gehäuse 42 lösbar oder unlösbar angeordnet sein. Eine lösbare Befestigung bedeutet die Austauschbarkeit nach Bedarf, insbesondere nach stärkerem Verschleiß, gegen einen neuen Verschleißeinsatz 46. Bei dem vorliegenden Ausführungsbeispiel ist die Befestigungsmethode offen gelassen worden, da eine Vielzahl an Befestigungsmethoden in Betracht zu ziehen sind. Als lösbare Verbindungen können Schraub- und/oder Steckverbindungen und/oder entsprechende Passungen o. dgl. verwendet werden. Der Verschleißeinsatz 46 kann auf diese Weise jederzeit nach Bedarf gewechselt und ausgetauscht werden. Ein Wechsel des Gehäuses 42, wie es bei den bekannten Dosieraggregaten erforderlich ist, muss bei lösbaren und austauschbaren Verschleißeinsätzen 46 nicht mehr vorgenommen werden.

Alternativ kann der Verschleißeinsatz 24 zur Ausbildung einer Innenmantelfläche 16 auch unlösbar in das Gehäuse 14 befestigt sein. Hier können bspw. Niet-, Schweiß- und/oder Klebverbindungen o. dgl. möglich sein. Denkbar sind auch jegliche weitere Verbindungsmethoden. Eine unlösbare Befestigung meint eine bauliche Einheit mit dem Gehäuse 42, das zusammen mit dem Verschleißeinsatz 46 ausgetauscht werden muss, sofern dieser verschlissen ist. Ein solcher kompletter Austausch des Gehäuses 42 mitsamt dem Verschleißeinsatz 46 muss jedoch deutlich seltener bzw. in deutlich größeren Zeitabständen erfolgen als bei herkömmlichen Gehäusen ohne solche Verschleißeinsätze.

Als Materialien können für den Verschleißeinsatz 46 sämtliche verschleißfeste Materialien bspw. in Form von Metallen und/oder Hartmetallen wie Stahl, P-Hartmetalle o. dgl. und/oder auch verschleißfeste Kunststoffe wie diverse Hochleistungskunststoffe o. dgl. verwendet werden. Wahlweise können die Materialien auch mit einer entsprechenden Hartbeschichtung versehen werden. Der Verschleißeinsatz 46 kann aus einem verschleißbeständigen Material, wahlweise auch aus mehreren Materialien bzw. aus einem Materialmix bestehen. In der bevorzugten Ausführungsform besteht der Verschleißeinsatz 46 aus einem einzigen Material. Der Verschleißeinsatz 46 zeichnet sich auch dadurch aus, dass dieser flächig ausgebildet ist, so dass die Förderung der Körner entlang der Innenmantelfläche 44 bzw. des Verschleißeinsatzes 46 unterstützt wird.

Die Fördereinrichtung 52 bzw. die Scheibe kann bei vorliegender Ausführungsform vorzugsweise über einen Elektromotor 58 angetrieben werden, dessen Drehzahl je nach Bedarf variabel ist; vgl. hierzu bspw. die Offenbarung der WO 2015/015005 A1.

Auch in den Figuren 3A und 3B lassen sich wiederum die Standbeine oder Stützfüße 54 erkennen, die für eine sichere Positionierung und Anordnung des Dosieraggregats 34 bzw. des Säaggregats 40 sorgen können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Sämaschine, pneumatisch arbeitende Sämaschine, Verteil- und/oder Sävorrichtung
- 12: Vorratsbehälter
- 14: Dosiereinrichtung
- 16: Luftstrom
- 18: Gebläse
- 20: Luftleitung
- 22: Steigrohr, Wellrohr
- 24: Zentralverteiler
- 26: Luftstrom, körnertragender Luftstrom
- 28: Saatleitung, Saatleitungen
- 30: Säschar
- 32: Ackerboden
- 34: Dosieraggregat
- 36: Sensor
- 38: Fahrgeschwindigkeit
- 40: Säaggregat
- 42: Gehäuse
- 44: Innenmantelfläche
- 46: Verschleißeinsatz
- 48: Steg, Stege
- 50: Verschluss, Bügelverschluss
- 52: Fördereinrichtung, rotierende Fördereinrichtung
- 54: Stützfuß, Standbein
- 56: Kornabgabe
- 58: Elektromotor

- A: Vereinzelungsbereich

## Patentansprüche

1. Dosieraggregat (34) für körniges Gut, welches Dosieraggregat (34) zumindest
- ein Gehäuse (42) mit annähernd kreisbahn- und/oder kreissegmentförmiger Innenmantelfläche (44),
- wenigstens eine Einlassöffnung für befördertes körniges Gut,
- eine konzentrisch zum Gehäuse (42) und/oder zur Innenmantelfläche (44) rotierende Fördereinrichtung (52) mit einer Öffnung oder mehreren Öffnungen und/oder Absätzen an ihrem Außenbereich und/oder ihrer Stirnseite zur Vereinzelung des beförderten körnigen Gutes,
- und wenigstens eine, annähernd tangential an die Innenmantelfläche (44) anschließende Auslassöffnung
umfasst, **dadurch gekennzeichnet, dass** die Innenmantelfäche (44) zumindest abschnittsweise durch einen Verschleißeinsatz (46) gebildet ist, wobei
- der Verschleißeinsatz (46) in dem Bereich beginnt, bei welchem ein Anstieg der Kreisbahn der Innenmantelfläche (44) erfolgt,
- sich der Verschleißeinsatz (46) über einen als Vereinzelungsbereich wirkenden Abschnitt erstreckt, sowie
- der Verschleißeinsatz (46) im Bereich der Auslassöffnung endet.

2. Dosieraggregat nach Anspruch 1, bei dem der Verschleißeinsatz (46) einer Form oder Kontur der Innenmantelfläche (44) des Gehäuses (42) des Dosieraggregats (34) folgt.

3. Dosieraggregat nach Anspruch 1 oder 2, bei dem sich der Verschleißeinsatz (46) über einen definierten Winkelbereich von mindestens 180°, vorzugsweise von 270°, innerhalb des Gehäuses (42) erstreckt.

4. Dosieraggregat nach einem der Ansprüche 1 bis 3, bei dem der Verschleißeinsatz (46) einteilig oder mehrteilig ausgebildet ist.

5. Dosieraggregat nach einem der vorherigen Ansprüche, bei dem der Verschleißeinsatz (46) aus einem verschleißfesten Material ausgebildet ist.

6. Dosieraggregat nach einem der vorherigen Ansprüche, bei dem der Verschleißeinsatz (46) dem Gehäuse (42) lösbar oder unlösbar zugeordnet ist.

7. Dosieraggregat nach einem der vorherigen Ansprüche, bei dem der Verschleißeinsatz (46) flächig ausgebildet ist.

8. Dosieraggregat nach einem der vorherigen Ansprüche, bei dem die Fördereinrichtung (52) aufgrund ihrer rotierenden Bewegung eine Vereinzelung des körnigen Guts entlang des Verschleißeinsatzes (46) bewirkt.

## Claims

1. A metering unit (34) for granular material, the metering unit (34) comprising at least
- a housing (42) with an inner cover surface (44) in approximately the form of a circular path and/or of a circle segment;
- at least one inlet opening for granular material being conveyed;
- a conveying device (52) rotating concentrically to the housing (42) and/or to the inner cover surface (44) and having one opening or a plurality of openings and/or shoulders at its outer area and/or at its front face for the separation of the granular material being conveyed;
- and at least one outlet opening approximately tangentially connecting to the inner cover surface (44);
**characterised in that** the inner cover surface (44) is at least in sections formed by a wear insert (46), wherein
- the wear insert (46) starts in the area in which the circular path of the inner cover surface (44) takes an upward slope;
- the wear insert (46) extends across a section acting as separation area; and
- the wear insert (46) ends in the area of the outlet opening.

2. The metering unit according to claim 1, in which the wear insert (46) follows a form or contour of the inner cover surface (44) of the housing (42) of the metering unit (34).

3. The metering unit according to claim 1 or 2, in which the wear insert (46) extends over a defined angle area of at least 180°, preferably of 270°, within the housing (42).

4. The metering unit according to one of the claims 1 to 3, in which the wear insert (46) is of one-piece or of multi-piece design.

5. The metering unit according to one of the previous claims, in which the wear insert (46) is formed from a wear-resistant material.

6. The metering unit according to one of the previous claims, in which the wear insert (46) is detachably or undetachably assigned to the housing (42).

7. The metering unit according to one of the previous claims, in which the wear insert (46) is formed in a planar manner.

8. The metering unit according to one of the previous claims, in which the separation of the granular material along the wear insert (46) is caused due to the rotating movement of the conveying device (52).

## Revendications

1. Groupe de dosage (34) pour des matières granulaires, lequel groupe de dosage (34) comprend au moins
- un boîtier (42) ayant une surface latérale intérieure (44) approximativement en forme de trajectoire circulaire et/ou de segment de cercle,
- au moins une ouverture d'entrée pour les matières granulaires transportés,
- un dispositif de transport (52) tournant de façon concentrique par rapport au boîtier (42) et/ou à la surface latérale intérieure (44) et ayant une ouverture ou une pluralité d'ouvertures et/ou d'épaulements sur sa zone extérieure et/ou sa face frontale pour individualiser les matières granulaires transportées,
- et au moins une ouverture de sortie qui est contiguë approximativement de façon tangentielle à la surface latérale intérieure (44),
**caractérisé par le fait que** la surface latérale intérieure (44) est formée au moins par sections par un insert d'usure (46), dans lequel
- ledit insert d'usure (46) commence dans la zone où la trajectoire circulaire de la surface latérale intérieure (44) va en montant,
- ledit insert d'usure (46) s'étend sur une section faisant office de zone d'individualisation, et
- ledit insert d'usure (46) se termine au niveau de l'ouverture de sortie.

2. Groupe de dosage selon la revendication 1, dans lequel l'insert d'usure (46) suit une forme ou un contour de la surface latérale intérieure (44) du boîtier (42) du groupe de dosage (34).

3. Groupe de dosage selon la revendication 1 ou 2, dans lequel l'insert d'usure (46) s'étend sur une zone angulaire définie d'au moins 180°, de préférence de 270°, à l'intérieur du boîtier (42).

4. Groupe de dosage selon l'une quelconque des revendications 1 à 3, dans lequel l'insert d'usure (46) est réalisé en une seule pièce ou en plusieurs pièces.

5. Groupe de dosage selon l'une quelconque des revendications précédentes, dans lequel ledit insert d'usure (46) est réalisé à partir d'un matériau résistant à l'usure.

6. Groupe de dosage selon l'une quelconque des revendications précédentes, dans lequel ledit insert d'usure (46) est associé de manière amovible ou non amovible au boîtier (42).

7. Groupe de dosage selon l'une quelconque des revendications précédentes, dans lequel l'insert d'usure (46) est réalisé en nappe.

8. Groupe de dosage selon l'une quelconque des revendications précédentes, dans lequel, du fait de son mouvement de rotation, le dispositif de transport (52) provoque que les matières granulaires sont individualisées le long de l'insert d'usure (46).
